# EUROPEAN PATENT APPLICATION

(11) **EP 2 879 089 A1**
(43) Date of publication of application: **03.06.2015**
(21) Application number: 13871790.5
(22) Date of filing: 02.07.2013
(51) Int. Cl.: G06T 1/00, G01S 13/91, G06F 17/30

(54) **INFORMATION PROCESSING DEVICE, INFORMATION PROCESSING SYSTEM, AND INFORMATION PROCESSING PROGRAM**

(30) Priority: 17.01.2013 JP 2013006691
(71) Applicant: Hitachi Solutions, Ltd., Tokyo 140-0002 (JP)
(72) Inventor: UEDA, Koji, Tokyo 140-0002 (JP)
(74) Representative: Liesegang, Eva
(86) International application number: PCT/JP2013/068091
(87) International publication number: WO 2014/112138

(57) **Abstract**

An information processing device is associated with a mobile body trajectory database storing mobile body trajectory data including a mobile body ID and trajectory data for each mobile body ID, and with an aerial photograph database storing aerial photograph data including an aerial photograph scene ID, a photography date/time, and a photography object range. The information processing device includes: a mobile body identifying process unit that searches the mobile body trajectory database and identifies the mobile body ID positioned in or around the photography object range of the aerial photograph scene around the photography date/time of the aerial photograph scene; a mobile body trajectory cut-out processing unit that, with respect to the mobile body ID identified by the mobile body identifying process unit, searches the mobile body trajectory database, and cuts out, from the mobile body trajectory data around the photography date/time, a mobile body trajectory data range to be linked to the aerial photograph scene to generate in-scene trajectory data; and a scene corresponding mobile body database storing the in-scene trajectory data linked to a set of the mobile body ID and the aerial photograph scene ID identifying the aerial photograph scene of each scene in the aerial photograph.

## Description

### Technical Field

The present invention relates to an information processing technology and to an information processing technology for assisting mutual information reference by combining an aerial photograph, such as a satellite image or a photograph taken by aircraft, with trajectory data of a mobile body, such as a person, a vehicle, a ship, or aircraft.

### Background Art

In recent years, it has become possible to obtain, as aerial photograph data for obtaining a photograph of the ground taken from the sky, high-resolution satellite images with resolutions on the order of 50 cm relatively inexpensively in addition to the conventional photograph taken by aircraft. The aerial photograph, such as a satellite image, is an image of a scene of an area of interest taken on a specific date.

Also, environments are becoming available for easily obtaining trajectory data of a mobile body, such as a person, a vehicle, a ship, or aircraft, due to an increase in performance and decreases in size and price of portable devices equipped with the Global Positioning System (GPS) reception function. Examples of the trajectory data include automobile probe data and the Automatic Identification System (AIS) data of ships.

An example of mobile body trajectory displaying technology is described in the following literature.

### Citation List

### Patent Literature

Patent Literature 1: JP 2011-254289 A

### Summary of the Invention

### Technical Problem

Conventionally, in order to identify a mobile body in a specific aerial photograph scene, it has been necessary to extract data around the time of photography from vast amounts of trajectory data of the mobile body, and then manually superpose the data using geographic information system (GIS) software and the like.

Further, in order to identify an aerial photograph scene in which a specific mobile body is shown, it has been necessary to repeatedly search aerial photograph scenes while varying the geographical range or photography period of the object of search in accordance with the position of the mobile body as it changes from moment to moment as time elapses.

An object of the present invention is to facilitate referencing the position or attribute information of a mobile body shown in an aerial photograph, or identify of an aerial photograph of a point showing the mobile body, for example.

### Solution to the Problem

According to one aspect of the present invention, an information processing device is associated with a mobile body trajectory database storing mobile body trajectory data including a mobile body ID and trajectory data for each mobile body ID, and with an aerial photograph database storing aerial photograph data including an aerial photograph scene ID, a photography date/time, and a photography object range. The information processing device includes a mobile body identifying process unit that searches the mobile body trajectory database and identifies the mobile body ID positioned in or around the photography object range of the aerial photograph scene around the photography date/time of the aerial photograph scene; a mobile body trajectory cut-out processing unit that, with respect to the mobile body ID identified by the mobile body identifying process unit, searches the mobile body trajectory database, and cuts out, from the mobile body trajectory data around the photography date/time, a mobile body trajectory data range to be linked to the aerial photograph scene to generate in-scene trajectory data; and a scene corresponding mobile body database storing the in-scene trajectory data linked to a set of the mobile body ID and the aerial photograph scene ID identifying the aerial photograph scene of each scene in the aerial photograph.

By preparing the scene corresponding mobile body database storing the in-scene mobile body trajectory data linked to the set of the mobile body ID and the aerial photograph ID in advance, the mobile body shown in the aerial photograph can be identified easily, for example.

The information processing device may include a mobile body attribute providing process unit that provides the set of the mobile body ID and the aerial photograph scene ID of each scene of the aerial photograph with attribute information of the mobile body.

The aerial photograph database may include the aerial photograph scene ID and attribute information of the aerial photograph, and the attribute information provided by the mobile body attribute providing process unit may be attribute information derived from at least one of the mobile body trajectory database and the aerial photograph database at the time of linking.

Because the scene corresponding mobile body database is created, by associating the attribute of the mobile body positioned in the object photography range of the aerial photograph with the aerial photograph in advance at the time of photography of the aerial photograph, the aerial photograph can be identified easily and at high speed.

The mobile body trajectory cut-out processing unit may further cut out the data stored in the scene corresponding mobile body database by narrowing the trajectory data of the mobile body to around the date/time of photography of the aerial photograph and the photography object range for each aerial photograph scene ID.

By holding the trajectory data narrowed to around the date/time of photography of the aerial photograph and the photography object for each photographed aerial photograph, the amount of data in the scene corresponding mobile body database can be decreased.

The information processing device may include an interpolation processing unit that subjects the mobile body trajectory data to an interpolation process in a time interval. While the mobile body trajectory data normally include an arrangement of point data consisting of time and position, the trajectory data may be subjected to an interpolation process in a time interval.

By the interpolation process, a smooth trajectory shape can be obtained. Further, a position at a specific date/time can also be more accurately estimated.

The information processing device may include a chip image cut-out processing unit that cuts out the aerial photograph scene image from the aerial image around an estimated position of the mobile body, and stores the aerial photograph scene image in the scene corresponding mobile body database as a chip image file.

By cutting out, from the aerial photograph showing the mobile body, a photograph around the mobile body, and storing the cut-out image as a chip image associated with the mobile body, the image of the mobile body as the object of interest can be easily referenced and utilized for identifying a change in the mobile body over time or deciphering the mobile body in another aerial photograph.

The information processing device may include a mobile body trajectory superposition unit that generates a superposed file superposing the trajectory data extracted from the scene corresponding mobile body database on an image of an aerial photograph extracted from the aerial photograph database.

The present invention also provides an information processing system including the information processing device and a superposed file display terminal including a display unit that performs a display based on the superposed file. Display control is performed whereby, with the display unit performing the display based on the superposed file superposed by the mobile body trajectory superposition unit, upon detection of a pointing operation with respect to the mobile body or its trajectory displayed on the display unit on the superposed file display terminal, the superposed file is accessed, and attribute information of the mobile body identified based on the pointing-operated position is displayed in association with the mobile body or trajectory.

The present invention also provides an information processing system including the information processing device and a superposed file display terminal including a display unit that performs a display based on the superposed file. Display control is performed whereby, with the display unit performing the display based on the superposed file superposed by the mobile body trajectory superposition unit, the superposed file is accessed in accordance with a search key that is input, and obtained attribute information is displayed in association with the mobile body or trajectory.

The present invention also provides an information processing system including the information processing device and a superposed file display terminal including a display unit that performs a display based on the superposed file. Display control is performed whereby, with the display unit performing the display based on the superposed file superposed by the mobile body trajectory superposition unit, the superposed file is accessed in accordance with a search key that is input, and the display of the mobile body or trajectory corresponding to a portion obtained in accordance with a process of acquiring or returning the obtained mobile body or trajectory data is modified.

Instead of accessing the superposed file, the scene corresponding mobile body database may be accessed on-line.

In a mode of delivery in which an aerial photograph and trajectory data are superposed on each other, a user interface may be formed such that the mobile body attribute information can be referenced by mouse-clicking or tapping the mobile body or trajectory, the display of the mobile body can be emphasized by conducting an attribute information search by inputting a text, or display divisions, such as color coding, can be switched depending on the attribute information.

Thus, even when a plurality of mobile bodies are present in the photograph, a mobile body matching the search condition can be indicated.

The present invention also provides an information processing system including the information processing device and an aerial photograph search terminal that conducts a search for an aerial photograph. In accordance with an input of search conditions of a mobile body ID and an interest object period from the aerial photograph search terminal, the data in the scene corresponding mobile body database are narrowed according to the search conditions, and an aerial photograph obtained in accordance with a process of acquiring or returning an aerial photograph showing a mobile body having the designated mobile body ID is displayed.

By designating the mobile body as the object of interest and the interest object period, all of the aerial photographs showing the mobile body can be identified, for example.

The scene corresponding mobile body database may include orientation or speed of the trajectory data of the mobile body as the object of interest, and the search for the aerial photograph may be performed based on the orientation or speed of the trajectory data of the mobile body as the object of interest.

The present invention also provides an information processing system including the information processing device and an aerial photograph search terminal that conducts a search for an aerial photograph. The scene corresponding mobile body database may include cloud coverage probability data of a possibility of the mobile body as the object of interest being clouded, and may narrow the aerial photograph for which the search is conducted, based on the cloud coverage probability data.

The present invention also provides an information processing system including the information processing device and an aerial photograph search terminal that conducts a search for an aerial photograph. The aerial photograph search terminal may include a means that identifies an aerial photograph showing the mobile body as the object of interest with another specific mobile body or a specific location in the same scene.

In this way, the aerial photograph and the like showing a plurality of mobile bodies can be simply searched for.

In the scene corresponding mobile body database, a photograph around the mobile body may be cut out from the aerial photograph showing the mobile body, and then stored as a chip image in association with the mobile body.

The image of the mobile body as the object of interest can be referenced easily and may be utilized for identifying a change in the mobile body over time or deciphering the mobile body in another aerial photograph.

The present invention provides an information processing program associated with a mobile body trajectory database storing mobile body trajectory data including a mobile body ID and trajectory data for each mobile body ID, and with an aerial photograph database storing aerial photograph data including an aerial photograph scene ID, a photography date/time, and a photography object range. The program causes a computer to execute: a mobile body identifying process of searching the mobile body trajectory database and identifying the mobile body ID positioned in or around the photography object range of the aerial photograph scene around the photography date/time of the aerial photograph scene; a mobile body cut-out process of, with respect to the mobile body ID identified by the mobile body identifying process unit, searching the mobile body trajectory database and cutting out, from the trajectory data of the mobile body around the photography date/time, a mobile body trajectory data range to be linked to the aerial photograph scene to generate in-scene trajectory data; and a process of linking, with respect to a set of the mobile body ID and the aerial photograph scene ID identifying the aerial photograph scene of each scene in the aerial photograph, the in-scene trajectory data, and storing the in-scene trajectory data in the scene corresponding mobile body database.

The present specification incorporates the contents described in the specification and/or drawings of Japanese Patent Application No. 2013-006691 as a basis for claim of priority of the present application.

### Advantageous Effects of Invention

According to the present invention, a mobile body shown in an aerial photograph can be simply identified.

Further, an aerial photograph of a point showing a mobile body, or mobile body attribute information can be referenced easily.

Furthermore, an aerial photograph scene having a high possibility of showing a specific mobile body can be easily identified.

### Brief Description of Drawings

FIG. 1 is a functional block diagram of a configuration example of an information processing system according to an embodiment of the present invention.
FIG. 2A illustrates a configuration example of a mobile body trajectory DB.
FIG. 2B illustrates a configuration example of an aerial photograph DB.
FIG. 2C illustrates an example of superposition of the trajectory of a mobile body on an aerial photograph.
FIG. 3 illustrates a data configuration example of a scene corresponding mobile body DB.
FIG. 4 illustrates an example of a superposed file display screen according to a first embodiment of the present invention.
FIG. 5 illustrates an example of a search screen according to a second embodiment of the present invention.
FIG. 6A is a flowchart of the flow of a preparation process for creating data of the scene corresponding mobile body DB in a preparation processing device.
FIG. 6B is a flowchart of an example of the flow of an attribute information referencing process.
FIG. 6C is a flowchart of an example of the flow of a mobile body display process based on attributes.
FIG. 7 is a flowchart of the flow of a process in an aerial photograph search terminal.

### Description of Embodiments

In the following, the information processing technology according to embodiments of the present invention will be described with reference to the drawings.

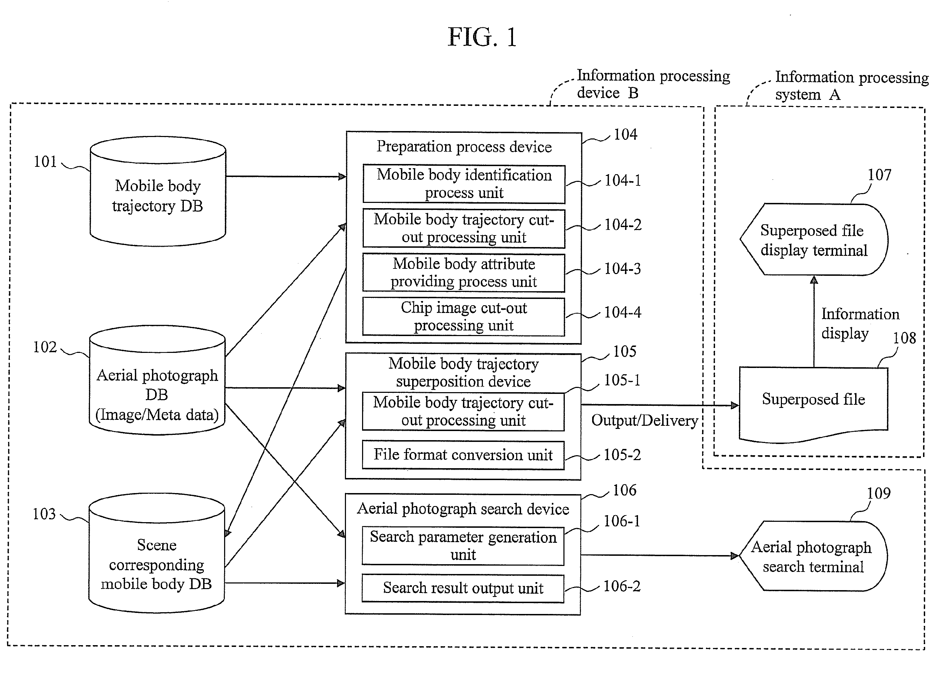

FIG. 1 is a functional block diagram of a configuration example of an information processing system according to the present embodiment.

As illustrated in FIG. 1, an information processing system A according to the present embodiment is a system that is normally not connected with an information processing device B via a network, and that includes a superposed file display terminal 107 that displays a superposed file 108 having a data configuration for superposing trajectory data of a mobile body, attributes and the like on an aerial photograph. The information processing device B includes a mobile body trajectory database (DB) 101 that stores mobile body track information; an aerial photograph database (DB) 102 that stores aerial photographs; a scene corresponding mobile body database (DB) 103 that stores scene corresponding mobile body information; a preparation processing device (processing unit) 104 that performs a preparation process; a mobile body trajectory superposition device (superposition unit) 105 that superposes a mobile body trajectory on an aerial photograph; an aerial photograph search device (search unit) 106 that conducts aerial photograph search; and an aerial photograph search terminal 109 that conducts aerial photograph search.

The superposed file display terminal 107 performs an information process using the superposed file 108 output or delivered by the information processing device B. Generally, the superposed file display terminal 107 is not connected with the information processing device B via a network (utilized off-line). The superposed file display terminal 107, however, may be connected with the information processing device B and used in on-line mode. The information processing device B as a whole may be constructed of a single device, such as a PC, or may be constructed as a system including other devices and the like. The DBs may include a conventional memory or an HDD in a PC, or a server and the like via a network. The entirety of FIG. 1 may constitute an information processing system.

The preparation processing device 104 includes a mobile body identifying process unit 104-1; a mobile body trajectory cut-out processing unit 104-2; a mobile body attribute providing process unit 104-3; and a chip image cut-out processing unit 104-4. The mobile body trajectory superposition device 105 includes a mobile body trajectory cut-out processing unit 105-1 and a file format conversion unit 105-2. The aerial photograph search device 106 includes a search parameter generation unit 106-1 and a search result output unit 106-2.

First, in a preparation process, the preparation processing device 104 extracts, from the mobile body trajectory DB 101, mobile body trajectory information to be linked to an aerial photograph with respect to each aerial photograph scene stored in the aerial photograph DB 102, and stores the information in the scene corresponding mobile body DB 103. A concrete method for the preparation process will be described later.

When the aerial photograph and the mobile body trajectory data are superposed, the mobile body trajectory superposition device 105 cuts the trajectory data extracted from the scene corresponding mobile body DB 103 in accordance with a range (which is often a part of the scene) of an aerial photograph as the object of delivery, and outputs the cut-out data, together with an image and attribute (meta) data of the aerial photograph extracted from the aerial photograph DB 102, as the superposed file 108 to be delivered. The data of the superposed file 108 can be displayed on a display unit of the superposed file display terminal 107 based on a display request from the superposed file display terminal 107, for example. When the file is utilized on-line, a link to the scene corresponding mobile body DB or the aerial photograph DB may be embedded in the file instead of embedding the image data, trajectory data, and attribute data, whereby the image data, trajectory data, and attribute data can be acquired on-line when the superposed file display terminal displays the information.

The aerial photograph search terminal 109, based on the input of an mobile body as the object of interest, an object period, and an additional search condition, searches for an aerial photograph in which the mobile body as the object of interest is shown.

As the additional search condition, an aerial photograph attribute (such as a photography condition or cloud coverage probability as scene attribute data), a mobile body attribute (such as the speed of the mobile body at the time of photography, destination of the mobile body, or the point of departure as mobile body attribute data) may be designated. It is also possible to conduct the aerial photograph search by designating a complex condition, such as that a plurality of the mobile bodies as the object of interest are shown at the same time in a single aerial photograph. In this case, by designating a plurality of mobile body IDs and the like, the object of search can be narrowed so that, for example, the search is conducted for aerial photographs showing a plurality of mobile bodies.

The aerial photograph search device 106 can generate a search parameter (such as a SQL statement) that satisfies the designated search conditions, search the aerial photograph DB 102 or the scene corresponding mobile body DB 103 using the parameter, modify the result, and output data to be displayed on the aerial photograph search terminal 109, for example.

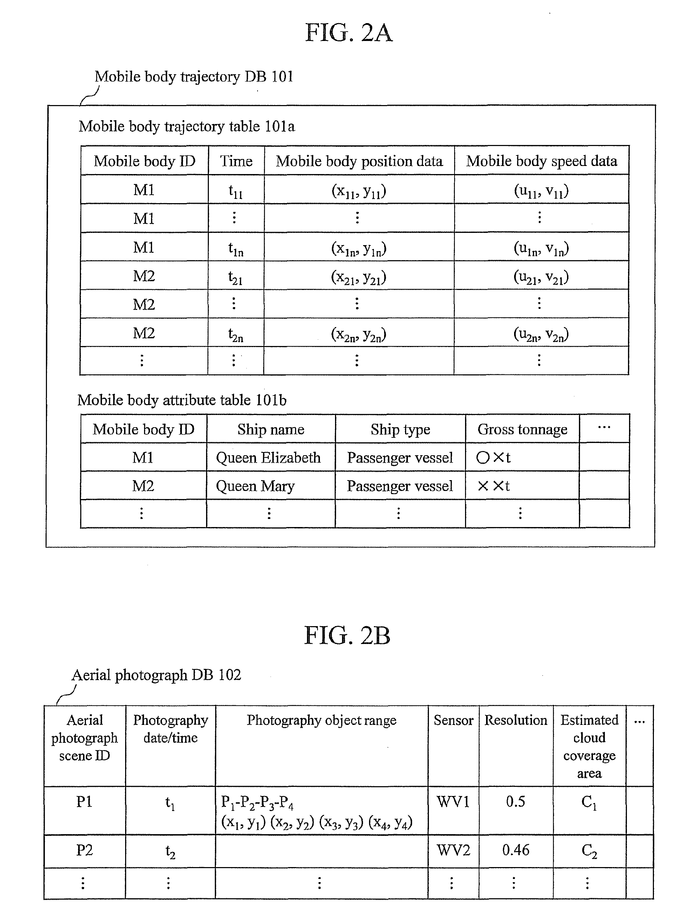

FIG. 2A illustrates a configuration example of the mobile body trajectory DB 101. As illustrated in FIG. 2A, the mobile body trajectory DB 101 includes a mobile body trajectory table 101a and a mobile body attribute table 101b.

The mobile body trajectory table 101a includes, e.g., a mobile body ID uniquely identifying the mobile body and, for each mobile body ID, time t, mobile body position data (x, y) at the time, and orientation/speed data (u, v) of the mobile body as an arbitrary attribute. Herein, x and y are positions on a two-dimensional surface, such as the latitude and the longitude, and t is the time at which the mobile body is positioned at the point.

The mobile body attribute table 101b holds the attribute data of each mobile body, and includes, for each mobile body ID, the name of the mobile body (or a ship name in the case of a ship), mobile body type (or a ship type in the case of a ship), and other mobile body characteristics (such as the gross tonnage in the case of a ship), for example. The mobile body trajectory table 101a and the mobile body attribute table 101b are related by the mobile body ID. While herein the mobile body trajectory DB 101 includes the two types of tables 101a and 101b, the type or number of the tables is not limited to the above.

FIG. 2B illustrates a configuration example of the aerial photograph DB 102. As illustrated in FIG. 2B, the aerial photograph DB 102 includes, for each aerial photograph, the aerial photograph scene ID uniquely identifying the aerial photograph; the photography date/time of the aerial photograph scene; the photography object range of the aerial photograph scene; and scene attribute data. The scene attribute data include, for example, a sensor (satellite) that took the aerial photograph; the resolution of the sensor; and a cloud coverage estimated area in the aerial photograph.

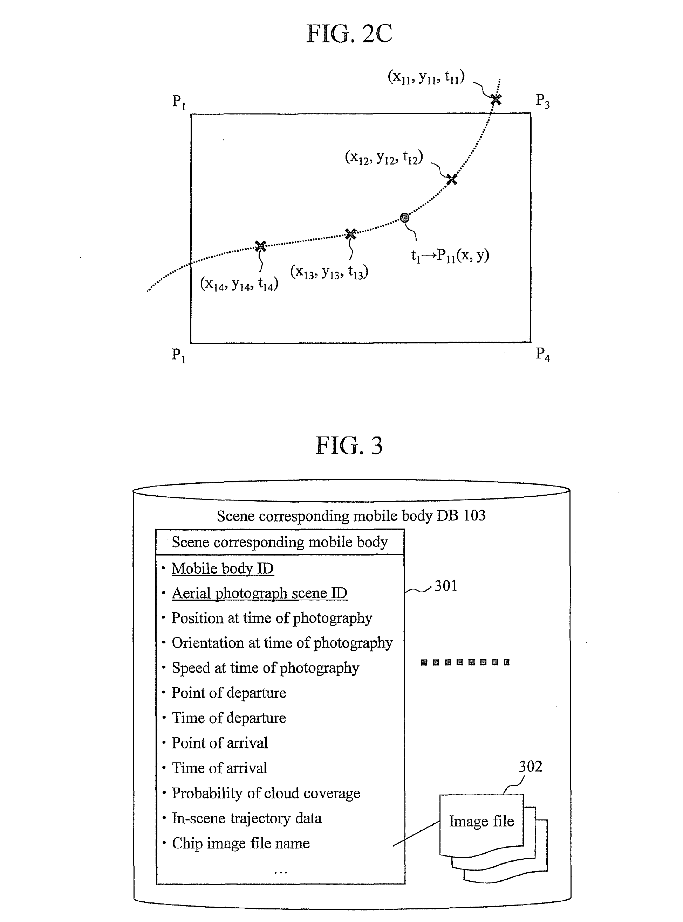

In FIG. 2A, the trajectory data of the mobile body (including time and mobile body position data) are generally given not as temporally continuous line data but as point data. If the time interval between point data is long, for example, it may become necessary to perform an interpolation process. FIG. 2C illustrates an example in which, with respect to an aerial photograph (a area having vertexes P₁-P₂-P₃-P₄), the trajectory of a mobile body has been superposed. The position P₁₁(x, y) of the mobile body shown in the aerial photograph taken at the time of photography t₁ is indicated on a trajectory connecting four points (x₁₁, y₁₁, t₁₁), (x₁₂, y₁₂, t₁₂), (x₁₃, y₁₃, t₁₃), (x₁₄, y₁₄, t₁₄) existing as trajectory data.

In order to more accurately grasp the position of the mobile body on the photography date/time and to display the trajectory data in a smooth shape, the mobile body data may be interpolated. For this purpose, a technique may be selected from a simple polygonal line and a spline curve, for example, depending on the positional accuracy or the smoothness of shape required for the particular purpose. When the orientation or speed at each point in the trajectory data is given, the Hermitian curve may be an alternative.

In order to more accurately grasp the position of the mobile body on the photography date/time t₁ and determine whether the mobile body is included in the aerial photograph range, it may become necessary to perform an interpolation process in the preparation processing device 104. For the purpose of making the shape of the trajectory data smooth, a trajectory data interpolation process may be performed in the mobile body trajectory superposition device 105 or the superposed file display terminal 107. For example, as illustrated in FIG. 2C, based on known, time-dependent data of the mobile body position indicated by crosses, the position P₁₁(x, y) of the mobile body at the photography time t₁ (t₁₂ < t₁ < t₁₃) can be determined by the interpolation process.

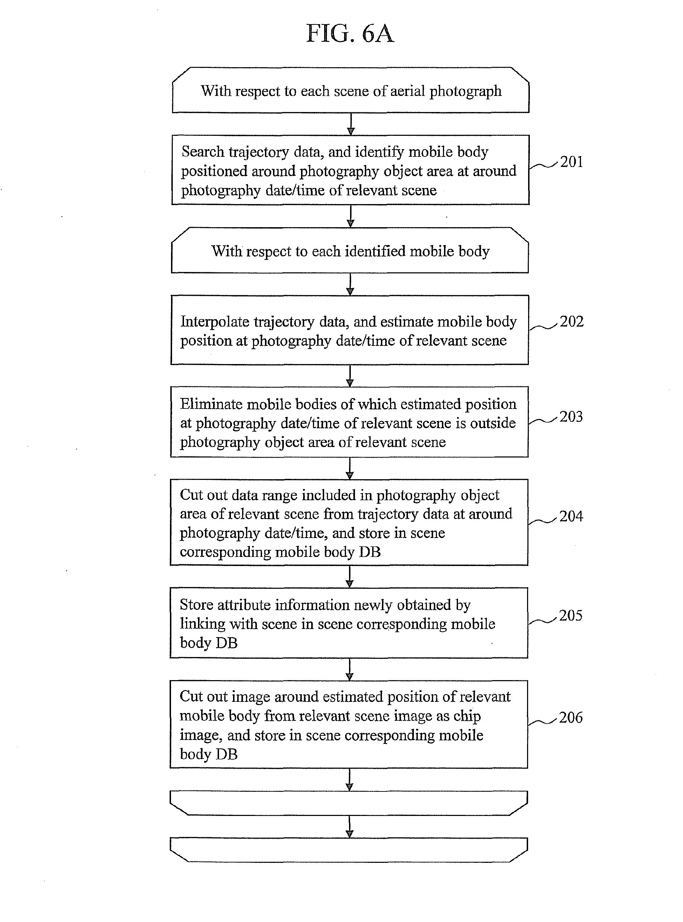

FIG. 6A is a flowchart of the preparation process for creating the data of the scene corresponding mobile body DB 103 illustrated in FIG. 3 in the preparation processing device 104 of FIG. 1. The flowchart will be described with reference to FIG. 1, FIG. 2A, and FIG. 2B as needed.

First, with respect to each scene of the aerial photograph identified by the aerial photograph scene ID in the aerial photograph DB 102 of FIG. 2B, the mobile body identifying process unit 104-1 searches the mobile body trajectory DB 101 of FIG. 2A for a mobile body positioned in or around the photography object range (such as P₁-P₂-P₃-P₄) of the aerial photograph scene around the photography date/time t₁ of the aerial photograph scene (step 201).

Herein, the "around the photography date/time" refers to the period of t₁-Δtₘₐₓ/2 and t₁ + Δtₘₐₓ/2, for example, where t₁ is the photography date/time of the scene, and Δtₘₐₓ is the maximum value of the interval of the trajectory data of the mobile body. As the "around the photography object range of the scene", it is sufficient to provide a area of the photography object range to the periphery of which the distance of vₘₐₓ. _{Δ}tₘₐₓ/2 is added as a buffer, where vₘₐₓ is the maximum speed of the mobile body. In this way, the mobile body ID can be searched for.

Then, with respect to each of the mobile bodies obtained by the search in step 201, the trajectory data of the mobile body is interpolated by the above-described method as illustrated in FIG. 2C, estimating the position of the mobile body at the photography date/time t₁ of the scene (step 202). The subsequent process is performed only for those of the mobile bodies of which estimated positions are within the photography object area of the scene after eliminating the mobile bodies of which the estimated positions are outside the photography object area of the scene (step 203).

Then, the mobile body trajectory cut-out processing unit 104-2 first cuts out, from the trajectory data of the mobile body around the photography date/time, a data range included in the photography object range of the scene, and stores the cut-out data range in the scene corresponding mobile body DB 103, as illustrated in FIG. 3 (step 204).

As illustrated in FIG. 3, in the scene corresponding mobile body DB 103, there are stored the items described below with respect to the set of the mobile body ID of the searched mobile body (FIG. 2A) and the aerial photograph ID (aerial photograph scene ID).

By linking the mobile body to the scene, i.e., using the set of the mobile body ID and the aerial photograph ID (aerial photograph scene ID) as a key, attribute data unique to the date/time or position of photography (position at the time of photography) are extracted. For example, by estimating the orientation (orientation at the time of photography) or speed (speed at the time of photography) of the mobile body at the photography date/time from the trajectory data, or by tracking the trajectory data temporally forward and backward, it becomes possible to estimate the point of departure of the mobile body (the point of departure) or the date/time of departure, or the point of arrival (destination) or the date/time of arrival.

The point of departure or destination may be estimated based on the trajectory data of the mobile body illustrated in FIG. 2A. By narrowing the trajectory data held in the scene corresponding mobile body DB 103 based on the date/time of aerial photography and the photography object range for each aerial photograph, the amount of data of the stored trajectory data can be decreased.

Further, overlap with attribute information newly obtained by the linking with the scene, such as a cloud coverage estimated area (FIG. 2B) extracted from the corresponding aerial photograph, or meteorological data of the same time separately obtained from a meteorological data provider and the like, may be evaluated, whereby the probability of whether the mobile body will be visually recognizable on the aerial photograph may be calculated as an index. The mobile body attribute providing process unit 104-3 stores these attribute information (provided attributes) in the scene corresponding mobile body DB 103 (step 205).

Finally, the chip image cut-out processing unit 104-4 cuts out an aerial photograph scene image around the estimated position of the mobile body from the aerial image, and stores the cut-out image in the scene corresponding mobile body DB 103 as a chip image file 302 (step 206). This completes the preparation process of storing data in the scene corresponding mobile body DB 103.

When the above preparation process is completed, the past data in the mobile body trajectory DB 101 (FIG. 2A) may be deleted. The mobile body trajectory data, if held in their entirety, often result in vast amounts of data. Thus, by deleting unwanted past data, the data storage medium can be saved.

In the data configuration example of the scene corresponding mobile body DB illustrated in FIG. 3, a scene corresponding mobile body table 301 is a table having a pair of mobile body ID and aerial photograph scene ID as a primary key. In-scene trajectory data may be stored as blob (binary large object) data, a separate table, or a file in the table in the scene corresponding mobile body DB. While in the present embodiment the chip image is held as the image file 302 according to JPEG and the like, the chip image may be stored in the table as blob data.

As illustrated in FIG. 3, the scene corresponding mobile body DB 103 is constructed in advance. Thus, with respect to the aerial photograph identified by the aerial photograph scene ID, by associating the mobile body (such as the mobile body ID) positioned in the object photography range of the aerial photograph and related attributes (such as the mobile body departure time and the probability of cloud coverage in the aerial photograph) with the time of photography of the aerial photograph (see FIG. 2B) in advance, it becomes possible to easily reference the trajectory of the mobile body shown in the aerial photograph or attribute information of the mobile body such as the cloud coverage probability, or to identify the aerial photograph that includes such attributes easily and at high speed.

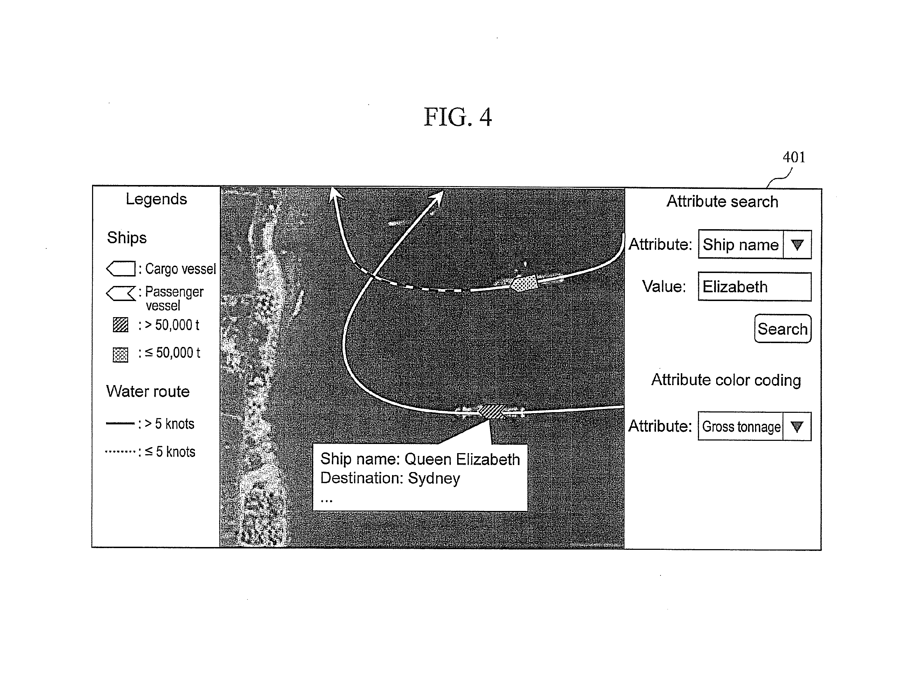

FIG. 4 illustrates a display screen example 401 in which the superposed file 108 is displayed on the superposed file display terminal 107. The mobile body trajectory superposition device 105 that outputs and delivers the superposed file in which the mobile body trajectory is superposed on the aerial photograph includes the mobile body trajectory cut-out processing unit 105-1 and the file format conversion unit 105-2.

The mobile body trajectory cut-out processing unit 105-1, by referring to the aerial photograph DB 102 and the scene corresponding mobile body DB 103, generates the superposed file 108 in which the in-scene trajectory data obtained from the data in the scene corresponding mobile body DB 103 of FIG. 3 are superposed on the aerial photograph obtained from the aerial photograph DB 102 of FIG. 2B based on the aerial photograph scene ID.

In the example of FIG. 4, two different mobile bodies and their trajectories are displayed in the aerial photograph.

The superposed file 108 may be converted by the file format conversion unit 105-2 in advance into a format in which raster and vector are superposed, such as GeoPDF, KML, or HTML 5, enabling the user to refer to information by a simple and charge-free means, such as Adobe Reader, Google Earth (both trademarks), or a browser, without using expensive software or difficult procedures.

In the superposed file display terminal 107, by displaying the position and trajectory data of the mobile body superposed on the aerial photograph based on the superposed file 108, the aerial photograph of a point showing the mobile body can be easily referenced.

With regard to the mobile body, an attribute can be known from the color or shape of a corresponding icon, or a movement orientation can be known from the direction of the icon. By mouse-clicking or tapping the mobile body or trajectory, the attribute information may be referenced. Conversely, a process may be performed whereby attribute information such as a text is input as search data so as to identify the mobile body matching a search condition and display the mobile body with emphasis on the aerial photograph, for example.

When the user searches for the aerial photograph showing a mobile body as the object of interest, the user inputs the mobile body as the object of interest, the object period, and an additional search condition, using the aerial photograph search device 109. As the additional search condition, an aerial photograph attribute (such as a photography condition), or a mobile body attribute (such as the speed at the time of photography, destination, or cloud coverage probability) may be designated. It is also possible to designate a complex condition such as that a plurality of mobile bodies as the object of interest are shown at the same time. The aerial photograph search device 106 generates a search parameter (such as a SQL statement) that satisfies the designated search conditions, and searches the aerial photograph database or the scene corresponding mobile body database using the search parameter. The result may be modified and presented to the user via the aerial photograph search terminal 109.

In the following, as an example of an information process according to the first embodiment of the present invention, a display process will be described for referencing the mobile body attribute information or identifying a mobile body based on an attribute, on the basis of the aerial photograph DB 102 illustrated in FIG. 2B and the scene corresponding mobile body data 301 illustrated in FIG. 3.

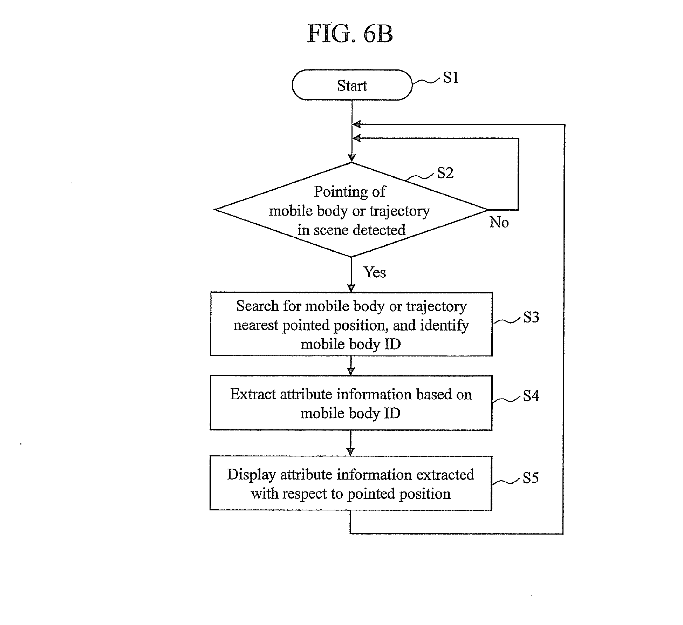

FIG. 6B is a flow chart of an example of an attribute information referencing process.

As illustrated in FIG. 6B, when the process is started (step S1) and a pointing operation on a mobile body or trajectory in a scene using the mouse or cursor is detected in step S2 (Yes), a search for a mobile body or trajectory closest to the pointed position detected in step S2 is conducted in step S, and the mobile body ID corresponding to the pointing operation is identified. In step S4, based on the mobile body ID identified in step S3, attribute information is extracted. In step S5, with respect to the pointed position detected in step S2, the attribute information extracted in step S4 is displayed on the display screen. For example, by the above-described process, a ship name based on the mobile body ID (such as "Queen Elizabeth"), or the destination ("Sydney") and the like obtained based on the trajectory data may be pop-up displayed on the image of FIG. 4. Thus, display control is executed such that, with the aerial photograph being displayed on the display unit of the superposed file display terminal 107 based on the superposed file superposed by the mobile body trajectory superposition device 105, the superposed file and the like is accessed in accordance with an input search key, and the display of the mobile body or trajectory is modified in a part obtained in accordance with a process of acquiring or returning the obtained mobile body or trajectory data. This may be helpful in a process of determining the trajectory data of the same mobile body at different times and superposing the data on the aerial photograph, for example.

These processes are such that, for example, in accordance with an operation by an operation unit such as the superposed file display terminal 107, attribute information and the like obtained, via the mobile body trajectory superposition device 105 or the aerial photograph search device 106 and, in accordance with a process of acquiring or returning the corresponding attribute information and the like in FIG. 3 that have been obtained from the data in the scene corresponding mobile body DB 103 based on the superposed file 108 in the preparation stage are displayed near the pointing-operated mobile body and the like in a balloon (mobile body name (ship name), destination), as shown in FIG. 4. Instead of the information acquisition based on the superposed file displayed on the superposed file display terminal 107, the superposed file display terminal 107 may be connected to the information processing device B on-line via a network to access the scene corresponding mobile body DB 103 of the information processing device B and acquire the attribute information and the like.

With regard to the mobile body, as shown under the legends in FIG. 4, an attribute may be known from the color or shape of the corresponding icon, or a movement orientation may be known from the direction of the icon. By using the data of FIG. 3, attribute information may be referenced by mouse-clicking or tapping the mobile body or trajectory. Conversely, a text may be input to search for attribute information and display the corresponding mobile body with emphasis.

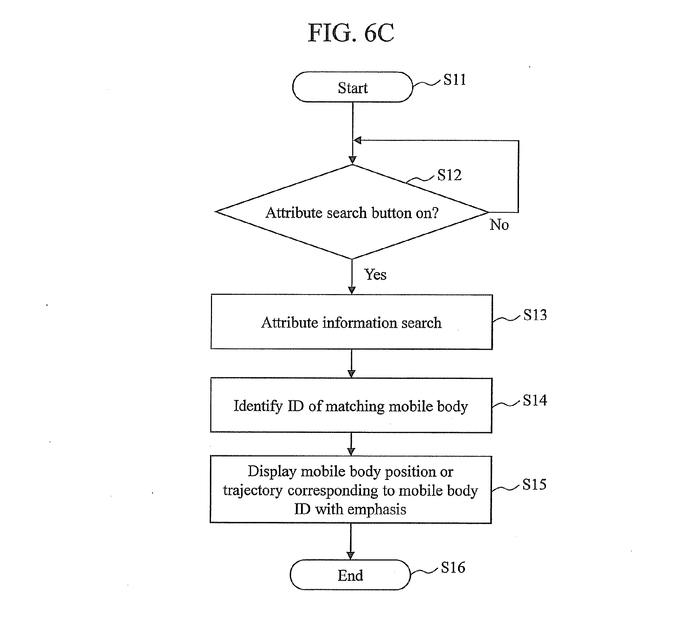

FIG. 6C is a flow chart of an example of a process of identifying the mobile body or trajectory based on attributes. As illustrated in FIG. 6C, when the process is started (step S 11: Start) and the search button is turned on with an attribute, such as the ship name "Elizabeth" placed in the attribute search area of FIG. 4 (YES in step S12), an attribute information search is conducted in step S13. In step S 14, the superposed file display terminal 107 or the scene corresponding mobile body data 301 of FIG. 3 is searched to identify the matching mobile body ID. In step S 15, a mobile body position or trajectory corresponding to the mobile body ID is displayed with emphasis (such as by providing hatching in the mark of ship). As illustrated in FIG. 4, one of the two mobile bodies, for example, may be clearly indicated by the display with emphasis and the like. This completes the process (step S16: End).

Thus, even when a plurality of mobile bodies are present in a single aerial photograph, a mobile body matching the search condition can be shown to the user. Thereafter, a pop-up display may be made by the process of FIG. 6B.

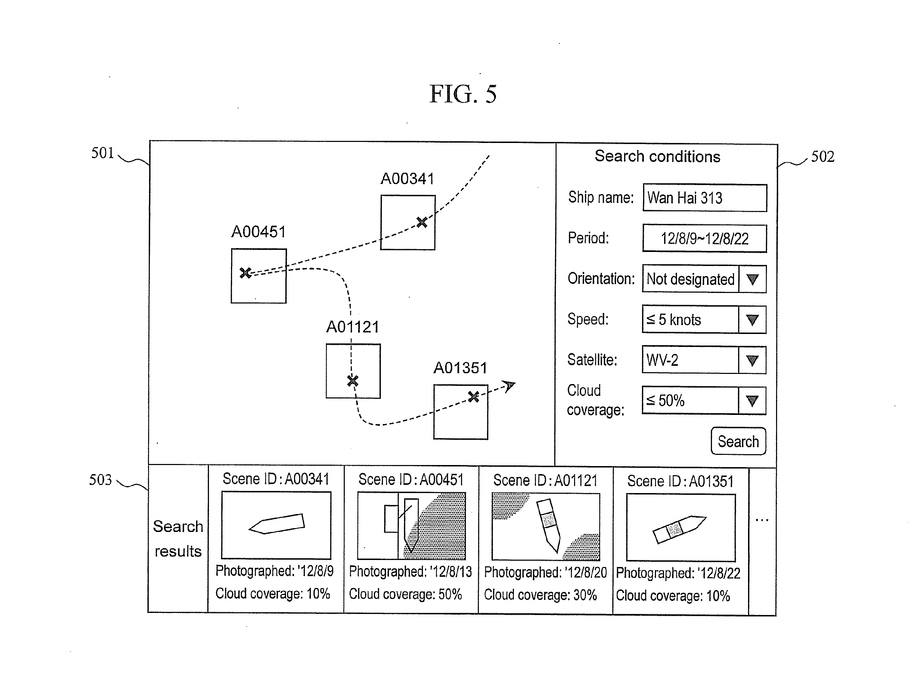

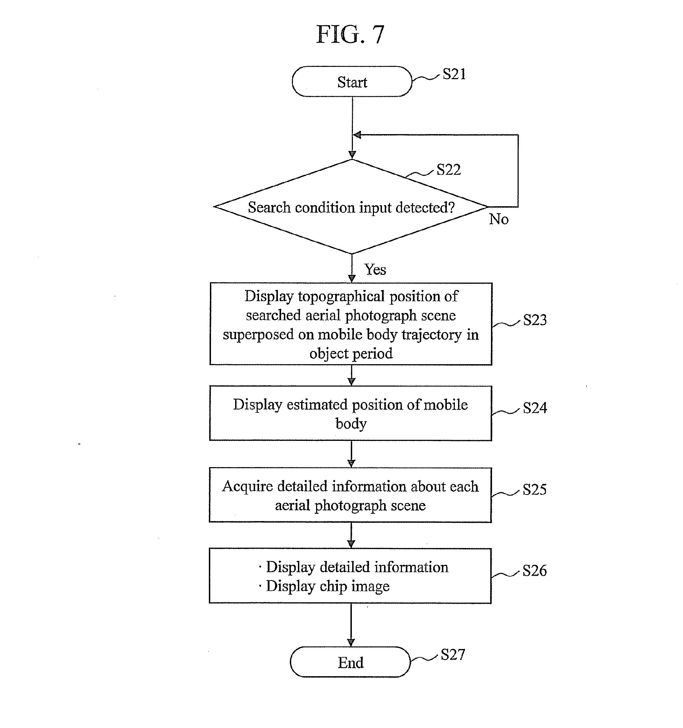

FIG. 7 shows the flow of an information process in the aerial photograph search device 106 according to a second embodiment of the present invention. FIG. 5 shows a search screen example. As shown in FIG. 5 and FIG. 7, when the process is started (step S21: Start) and an input operation is detected with search conditions, such as the ID of a mobile body as the object of interest, an additional search object period and the like, entered in the search area 502 (step S22: YES), the geographical positions of the searched aerial photograph scenes are displayed while being superposed on the trajectory of the mobile body during the object period (step S23). Together, the estimated position of the mobile body at the photography date/time in each aerial photograph scene is displayed (step S24: area 501 in FIG. 5). Further, in a separate display area, there is displayed more detailed information about each of the aerial photograph scenes acquired in step S25. For example, by displaying a plurality of chip images matching the search conditions (area 503 in FIG. 5: step S26), image selection by the user can be further assisted. Then, the process ends (end: step S27).

When identifying an aerial photograph showing a plurality of mobile bodies, the aerial photograph scene ID may be identified based on a plurality of mobile body IDs, and the corresponding aerial photograph may be extracted.

As illustrated in FIG. 5, the orientation at the time of photography, the photography dates, and the cloud coverage probability (%) in the image can be displayed on a scene by scene basis for each mobile body scene ID in the display area 501 and for each scene ID indicated as a search result in the display area 503. By selecting any of the scenes (IDs) from among the alternatives (503) obtained as search results based on the search results, the desired aerial photograph can be displayed in the area 501.

According to the present embodiment, the process of selecting an aerial photograph image matching a search condition, the process of referencing detailed information, and the like can be assisted.

The foregoing embodiments are not limited to the elements and the like shown in the attached drawings, and may be variously modified within a scope such that the effects of the present invention can be obtained. The embodiments may be modified and implemented without departing from the scope of the purpose of the present invention.

For example, the present invention includes a method invention, a program invention, and an invention of a storage medium for storing the program.

The constituent elements of the present invention may be selectively adopted as desired, and an invention provided with the selectively adopted elements is also included in the present invention.

### Industrial Applicability

The present invention may be utilized as an information processing device.

### Reference Signs List

- 101: Mobile body trajectory database (DB)
- 102: Aerial photograph database (DB)
- 103: Scene corresponding mobile body database (DB)
- 104: Preparation processing device
- 105: Mobile body trajectory superposition device
- 106: Aerial photograph search device
- 107: Superposed file display terminal
- 108: Superposed file
- 109: Aerial photograph search terminal
- 301: Scene corresponding mobile body data
- 302: Chip image file
- 401: Display screen example
- 501: Aerial photograph search result geographical display area
- 502: Aerial photograph search condition input area
- 503: Aerial photograph search result detailed information display area

All publications, patents, and patent applications cited in the present specification are incorporated herein by reference in their entirety.

## Claims

1. An information processing device associated with a mobile body trajectory database storing mobile body trajectory data including a mobile body ID and trajectory data for each mobile body ID, and with an aerial photograph database storing aerial photograph data including an aerial photograph scene ID, a photography date/time, and a photography object range,
the information processing device comprising:
a mobile body identifying process unit that searches the mobile body trajectory database and identifies the mobile body ID positioned in or around the photography object range of the aerial photograph scene around the photography date/time of the aerial photograph scene;
a mobile body trajectory cut-out processing unit that, with respect to the mobile body ID identified by the mobile body identifying process unit, searches the mobile body trajectory database, and cuts out, from the mobile body trajectory data around the photography date/time, a mobile body trajectory data range to be linked to the aerial photograph scene to generate in-scene trajectory data; and
a scene corresponding mobile body database storing the in-scene trajectory data linked to a set of the mobile body ID and the aerial photograph scene ID identifying the aerial photograph scene of each scene in the aerial photograph.

2. The information processing device according to claim 1, comprising a mobile body attribute providing process unit that provides the set of the mobile body ID and the aerial photograph scene ID of each scene of the aerial photograph with attribute information of the mobile body.

3. The information processing device according to claim 2, wherein the aerial photograph database includes the aerial photograph scene ID and attribute information of the aerial photograph, and the attribute information provided by the mobile body attribute providing process unit is attribute information derived from at least one of the mobile body trajectory database and the aerial photograph database at the time of linking.

4. The information processing device according to any one of claims 1 to 3, wherein the mobile body trajectory cut-out processing unit cuts out the data stored in the scene corresponding mobile body database by narrowing the trajectory data of the mobile body to around the date/time of photography of the aerial photograph and the photography object range for each aerial photograph scene ID.

5. The information processing device according to any one of claims 1 to 4, comprising a chip image cut-out processing unit that cuts out the aerial photograph scene image from the aerial image around an estimated position of the mobile body, and stores the aerial photograph scene image in the scene corresponding mobile body database as a chip image file.

6. The information processing device according to any one of claims 1 to 5, comprising an interpolation processing unit that subjects the trajectory data of the mobile body to an interpolation process in a time interval.

7. The information processing device according to any one of claims 1 to 6, comprising a mobile body trajectory superposition unit that generates a superposed file superposing the trajectory data extracted from the scene corresponding mobile body database on an image of an aerial photograph extracted from the aerial photograph database.

8. An information processing system comprising the information processing device according to claim 7 and a superposed file display terminal including a display unit that performs a display based on the superposed file,
wherein display control is performed whereby, with the display unit performing the display based on the superposed file superposed by the mobile body trajectory superposition unit, upon detection of a pointing operation with respect to the mobile body or its trajectory displayed on the display unit in the superposed file display terminal, the superposed file or the scene corresponding mobile body database is accessed, and attribute information of the mobile body identified based on the pointing-operated position is displayed in association with the mobile body or trajectory.

9. An information processing system comprising the information processing device according to claim 7, and a superposed file display terminal including a display unit that performs a display based on the superposed file,
wherein display control is performed whereby, with the display unit performing the display based on the superposed file superposed by the mobile body trajectory superposition unit, the superposed file or the scene corresponding mobile body database is accessed in accordance with a search key that is input, and obtained attribute information is displayed in association with the mobile body or trajectory.

10. An information processing system comprising the information processing device according to claim 7 and a superposed file display terminal including a display unit that performs a display based on the superposed file,
wherein display control is performed whereby, with the display unit performing the display based on the superposed file superposed by the mobile body trajectory superposition unit, the superposed file or the scene corresponding mobile body database is accessed in accordance with a search key that is input, and the display of the mobile body or trajectory is modified at a portion obtained in accordance with a process of acquiring or returning the obtained mobile body or trajectory data.

11. An information processing system comprising the information processing device according to claim 7 and an aerial photograph search terminal that conducts a search for an aerial photograph,
wherein, in accordance with an input of search conditions of a mobile body ID and an interest object period from the aerial photograph search terminal, the data in the scene corresponding mobile body database are narrowed according to the search conditions, and an aerial photograph obtained in accordance with a process of acquiring or returning an aerial photograph showing the mobile body having the designated mobile body ID is displayed.

12. The information processing system according to claim 11, wherein the scene corresponding mobile body database includes an orientation or speed of the trajectory data of the mobile body as the object of interest, and the aerial photograph search terminal conducts the search for the aerial photograph based on the orientation or speed of the trajectory data of the mobile body as the object of interest.

13. An information processing system comprising the information processing device according to claim 7 and an aerial photograph search terminal that conducts a search for an aerial photograph,
wherein the scene corresponding mobile body database includes cloud coverage probability data of a possibility of the mobile body as the object of interest being clouded, and narrows, based on the cloud coverage probability data, the aerial photograph for which the search is conducted.

14. An information processing system comprising the information processing device according to claim 7 and an aerial photograph search terminal that conducts a search for an aerial photograph,
wherein the aerial photograph search terminal includes a means that identifies an aerial photograph showing the mobile body as the object of interest with another specific mobile body or a specific location in the same scene.

15. An information process method of associating a mobile body trajectory database storing mobile body trajectory data including a mobile body ID and trajectory data for each mobile body ID with an aerial photograph database storing aerial photograph data including an aerial photograph scene ID, a photography date/time, and a photography object range,
the method causing a computer to execute:
a mobile body identifying step of searching the mobile body trajectory database and identifying the mobile body ID positioned in or around the photography object range of the aerial photograph scene around the photography date/time of the aerial photograph scene;
a mobile body cut-out step of, with respect to the mobile body ID identified by the mobile body identifying process unit, searching the mobile body trajectory database and cutting out, from the trajectory data of the mobile body around the photography date/time, a mobile body trajectory data range to be linked to the aerial photograph scene to generate in-scene trajectory data; and
a step of associating and linking, with respect to a set of the mobile body ID and the aerial photograph scene ID identifying the aerial photograph scene of each scene in the aerial photograph, the in-scene trajectory data, and storing the in-scene trajectory data in the scene corresponding mobile body database.

16. An information processing program of associating a mobile body trajectory database storing mobile body trajectory data including a mobile body ID and trajectory data for each mobile body ID with an aerial photograph database storing aerial photograph data including an aerial photograph scene ID, a photography date/time, and a photography object range,
the program causing a computer to execute:
a mobile body identifying process of searching the mobile body trajectory database and identifying the mobile body ID positioned in or around the photography object range of the aerial photograph scene around the photography date/time of the aerial photograph scene;
a mobile body cut-out process of, with respect to a mobile body ID identified by the mobile body identifying process unit, searching the mobile body trajectory database and cutting out, from the trajectory data of the mobile body around the photography date/time, a mobile body trajectory data range to be linked to the aerial photograph scene to generate in-scene trajectory data; and
a process of linking, with respect to a set of the mobile body ID and the aerial photograph scene ID identifying the aerial photograph scene of each scene in the aerial photograph, the in-scene trajectory data, and storing the in-scene trajectory data in the scene corresponding mobile body database.

17. A content readable recording medium having the information processing program according to claim 16 recorded therein.
